(19) Europäisches Patentamt

European Patent Office

Office européen des brevets

(11) Veröffentlichungsnummer : **0 041 137**
**B1**

(12) **EUROPÄISCHE PATENTSCHRIFT**

(45) Veröffentlichungstag der Patentschrift :
25.07.84

(21) Anmeldenummer : 81103428.9

(22) Anmeldetag : 06.05.81

(51) Int. Cl.³ : **G 11 B 17/02, G 11 B 3/62**

(54) Laufwerk für scheibenförmige Aufzeichnungsträger.

(30) Priorität : **30.05.80 DE 3020525**

(43) Veröffentlichungstag der Anmeldung :
**09.12.81 Patentblatt 81/49**

(45) Bekanntmachung des Hinweises auf die Patenterteilung : **25.07.84 Patentblatt 84/30**

(84) Benannte Vertragsstaaten :
**AT BE CH DE FR GB IT LI NL SE**

(56) Entgegenhaltungen :
**DE-A- 2 338 834**
**DE-A- 2 524 316**
**DE-A- 2 709 261**
**DE-B- 2 330 818**
**US-A- 3 898 814**

(73) Patentinhaber : **BASF Aktiengesellschaft**
**Carl-Bosch-Strasse 38**
**D-6700 Ludwigshafen (DE)**

(72) Erfinder : **Hack, Joachim**
**Pfarrer-Friedrich-Strasse 34**
**D-6700 Ludwigshafen (DE)**
Erfinder : **Brotzler, Roland**
**Langstrasse 34**
**D-6701 Hochdorf-Assenheim (DE)**
Erfinder : **Schulze-Berge, Klaus**
**Ungsteiner Strasse 10**
**D-6700 Ludwigshafen (DE)**
Erfinder : **Angermann, Rudolf**
**Johann-Sebastian-Bach-Strasse 6**
**D-7600 Offenburg (DE)**

EP 0 041 137 B1

Jouve, 18, rue St-Denis, 75001 Paris, France

## Beschreibung

Die Erfindung betrifft ein Laufwerk für scheibenförmige Aufzeichnungsträger mit Mittelloch, insbesondere Magnetfolien in einer Umschlaghülle, enthaltend eine Antriebsvorrichtung für den Aufzeichnungsträger, die im wesentlichen aus einem antreibbaren Spannkonus und einem angetriebenen Hohlkonus besteht, wobei nach Einführung des Aufzeichnungsträgers dazwischen durch Ineingriffbringen von Spann- und Hohlkonus der Aufzeichnungsträger in Sollage antreibbar eingespannt wird und eine Einrichtung vorgesehen ist, mittels der der Hohlkonus in Wirkverbindung mit dem Spannkonus gebracht und in Drehung versetzt wird und danach der Aufzeichnungsträger in Sollage festgeklemmt wird.

Es ist mit der US-A 3 898 814 ein solches Laufwerk bekannt, worin eine Feder dazu dient, die Sollage des Aufzeichnungsträgers zwischen den Klemmflächen der Antriebsspindel und der Klemmnabe aufrecht zu erhalten. Die Federwirkung tritt dabei erst nach Abschluß des Klemmvorgangs ein. Der Zweck des bekannten Laufwerks liegt darin zu erreichen, daß Antriebsspindel und Nabe mit derselben Winkelgeschwindigkeit drehen, damit die Aufzeichnungsfolie sowohl frühzeitig als auch mit einem höheren Drehmoment angetrieben wird. Dabei sind Zentrierfinger und eine Kegelfläche für einen Zentriervorgang des Aufzeichnungsträgers vorgesehen, der unmittelbar vor der Mitnahme der Aufzeichnungsfolie durch die Antriebsspindel bewerkstelligt wird.

Im praktischen Betrieb solcher Laufwerke haben sich Modulationsfehler bei der Wiedergabe von aufgezeichneten Signalen ergeben.

Es ist Aufgabe der vorliegenden Erfindung, diese Fehler zu beseitigen, so daß eine bessere Zentrierung des Aufzeichnungsträgers auch bei Vorliegen eines exzentrischen Mittellochs erfolgt.

Die Aufgabe wird mit dem eingangs näher bezeichneten Erfindungsgegenstand gelöst, wenn die Einrichtung zum Herstellen der Wirkverbindung ein Federelement aufweist, das die Wirkverbindung durch das Innenloch des Aufzeichnungsträgers hindurch herstellt und eine Federkonstante im Bereich zwischen 0,20 N/mm und 1,0 N/mm, vorzugsweise 0,4 N/mm besitzt, wodurch zu einem vorgegebenen Zeitpunkt der noch ruhende und nicht zentrierte Aufzeichnungsträger durch die Relativdrehung und Mitnahme durch den Spannkonus zentrierbar wird und erst nach Zentrierung in Sollage festklemmbar ist.

Dadurch erfolgt durch frühzeitiges Mitdrehen des Spannkonus mit dem Hohlkonus eine selbsttätige Zentrierung des Aufzeichnungsträgers, jedoch noch kein Antriebseingriff wie bei dem bekannten Laufwerk.

Durch die zweckmäßige Auslegung des Federelements mit einer Federkonstante zwischen 0,20 N/mm und 1,0 N/mm wird reproduzierbar einstellbar, zu welchem Zeitpunkt der Spannkonus und damit der Aufzeichnungsträger in Drehung versetzt und damit rechtzeitig vor der Klemmung in Sollage zentriert wird.

Vorteilhaft bei Anwendung der vorliegenden Erfindung ist besonders, daß auch bei schlecht zentrierenden Laufwerken Signalfehlerverbesserungen erreichbar werden, ebenso wie bei Aufzeichnungsscheiben mit exzentrischen Mittelloch, die überraschenderweise nahezu fehlerlos betreibbar werden.

Es kann praktisch auch günstig sein, zwei Federelemente, je eines am Spannkonus und eines am Hohlkonus vorzunehmen.

Einzelheiten des erfindungsgemäßen Laufwerks sind aus der nachfolgenden Beschreibung von Ausführungsbeispielen, die in der Zeichnung dargestellt sind, entnehmbar.

In der Zeichnung stellen dar:

Figur 1 ein Laufwerk in schematischer Seitenansicht mit sichtbarer Anordnung von Spann- und Hohlkonussen,

Figur 1a das Laufwerk in Draufsicht,

Figur 2a-2d Spann- bzw. Hohlkonus in Einzeldarstellungen gemäß der Erfindung,

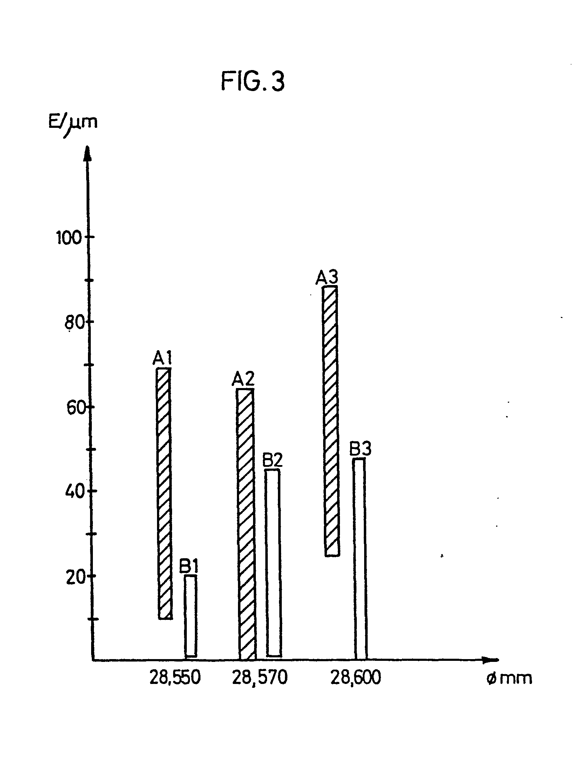

Figur 3 ein Diagramm, das die Exzentrizität des Mittelpunktes des Aufzeichnungsträgers in Abhängigkeit von verschiedenen Innenloch-Durchmessern des Aufzeichnungsträgers zeigt.

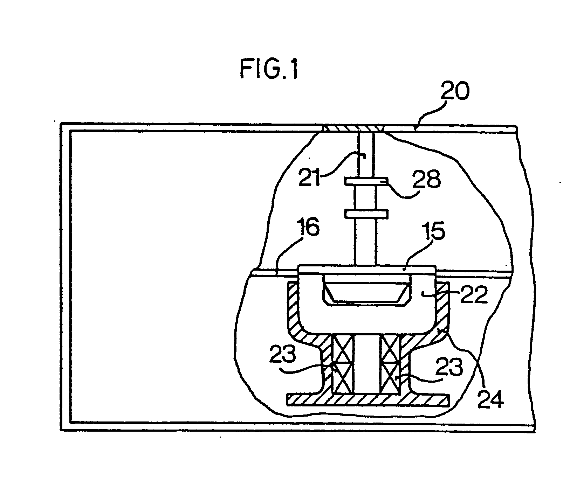

Figur 1 zeigt ein Gehäuse 20 eines Plattenspeicher-Laufwerks für kreisförmige, flexible Magnetfolien 16 in festeren rechteckförmigen Umschlaghüllen 17. Die Magnetkreisfolie 16 wird mit der Umschlaghülle 17 durch eine nicht dargestellte Einführöffnung eingelegt. Im Inneren des Gehäuses 20 befindet sich ein drehbar gelagerter Spannkonus 15, der zum Spannen und Drehantrieb der Kreisfolie 16 dient. Das Gegenstück ist ein durch nicht dargestellte Antriebseinrichtungen in Drehung versetzbarer Hohlkonus 22, dessen Außengehäuse 24 am Boden des Plattenspeichergehäuses 20 befestigt ist. Zwischen Außengehäuse 24 und Hohlkonus 22 sind Drehlager 23 vorgesehen. Der Spannkonus ist um eine Führungsbuchse 28 drehbar, die ihrerseits auf einer gehäusefesten Achse 21 verschiebbar ist. In Figur 1 ist die Betriebsposition des Spannkonus 15, in Eingriff mit dem Hohlkonus 22, dargestellt. Zum Laden der Folie 16 mit Hülle 17 in das Gerät 20 werden Führungsbuchse 28 und Spannkonus 15 außer Eingriff mit dem Hohlkonus 22 bewegt, so daß Hülle 17 und Folie 16 dazwischenschiebbar sind. Nach Einschieben werden Spann- und Hohlkonus 15 bzw. 22 miteinander in Eingriff gebracht, wodurch die Folie 16 zwischen Spannkonus 15 und Mitnehmer-Hohlkonus 22 festgeklemmt und angetrieben wird.

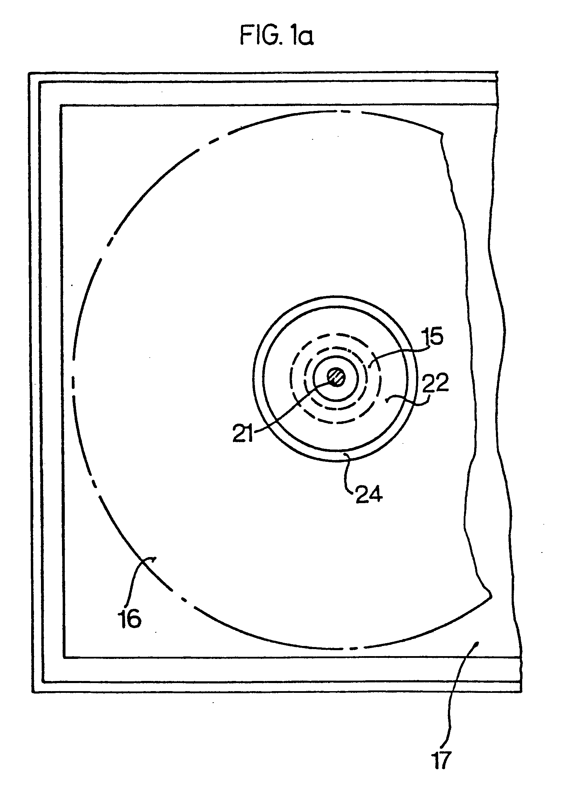

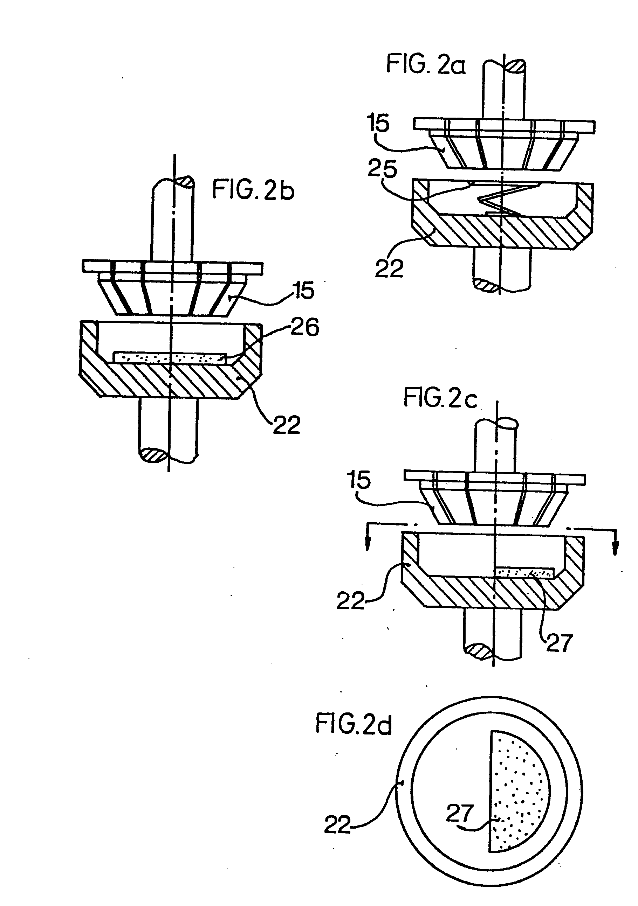

Infolge von Toleranzen der Klemmelemente des Laufwerks und/oder des Mittellochs der Folie 16 und/oder falschem Auflegen der Folie 16 kommt es zu Signalstörungen bei der Wiedergabe von aufgezeichneten Signalen durch ungleichförmige Drehbewegungen der Folie 16, die als Signalmodulationen auftreten. Gemäß Figur 2 sind verschiedene Lösungsmöglichkeiten, jeweils mit Spann- und Hohlkonus dargestellt. Figur 2a zeigt eine kegelförmige Schraubenfeder 25 zwischen Spann- und Hohlkonus 15 bzw. 22, die am Teil 22 befestigt ist. Ebenso kann natürlich eine Zylinder-Schraubenfeder oder vorzugsweise, wegen des geringeren Platzbedarfs, eine Blattfeder beliebiger Form verwendet werden. Figur 2b zeigt ein Federelement 26 aus elastischem Kunststoffmaterial, vorzugsweise Schaumstoff, wie z. B. Polyurethan- oder PVC-Schaumstoffe oder andere kautschukartige Schaumstoffe. Die Dicke des Federelements 26, das hier scheibenförmig ist, wird entsprechend der benötigten Federkonstanten und der gewünschten Reibkraft entsprechend gewählt, da die Sollage der Konusse 15 und 22 zueinander und somit der maximale Federweg vorgegeben ist. Dabei ist jedoch wesentlich, daß der Kontakt zwischen Spannkonus 15 und Hohlkonus 22 über das Zwischenschalten des Federelements 25 oder 26 auf dem Weg des Sapnnkonus 15 bis zu seiner Sollage erfolgt, wodurch der Spannkonus 15 entweder gespreizt wird und so die Folie 16 vorher festgehalten und/oder der Konus 15 mitgedreht wird, bevor die Folie 16 in Sollage festgeklemmt ist. Der Hohlkonus 22 ist also entsprechend vorzeitig anzutreiben.

Wenn der Spannkonus 15 somit in Drehung versetzt wird, erfolgt durch die Relativbewegung zur gerade noch ruhenden Folie 16 eine Zentrierung der Folie 16 zum Gerät, insbesondere zum Abtastkopf (nicht dargestellt), so daß Störsignale beim späteren Lesen weitgehend vermeidbar sind. Figuren 2c und 2d zeigen eine dezentrische Anordnung eines Kunststoff-Federelements 27, wodurch der Zentriereffekt noch verstärkt wird. Die Form des Federelements 27 — hier Halbkreisform — ist beliebig. Im dargestellten Fall ist das Schaumstoffkissen 27 auf den Boden des Hohlkonus 22 aufgeklebt. Selbstverständlich kann auch eine Metallfeder anstelle des Schaumstoffkissens 27 dezentral angebracht werden. Es ist grundsätzlich auch möglich, das Federelement am Spannkonus 15 zu befestigen oder sogar zwei Federelemente, eines am Spannkonus 15 und das andere am Hohlkonus 22 zu befestigen und diese in beschriebener Weise in Kontakt zu bringen und Spreizen des Konus 15 und/oder Mitdrehen der Folie 16 zu erreichen.

In der Praxis wurde ein Laufwerk einmal mit und ohne Federelement im Test verglichen. Bei diesem Test wurde ein Federelement 27 aus Polyurethan-Schaumstoff mit einer Dicke von ca. 3 mm und einer Federkonstanten von ca. 40 gr/mm, entsprechend etwa 0,4 N/mm benutzt.

Die Vergleichstests wurden bei drei verschiedenen Innenloch-Durchmessern von Flexydisks® (Warenzeichen der BASF Aktiengesellschaft) durchgeführt. Mit der Kennziffer 1 ist jeweils die untere Toleranzgrenze, mit 2 der Solldurchmesser und mit 3 die obere Toleranzgrenze gekennzeichnet. Die exzentrischen Abweichungen des Folienmittelpunktes vom Sollmittelpunkt wurde dabei über je 30 Einspanntests ermittelt. Mit dem Buchstaben A sind die Tests ohne Federelemente und mit B die Tests unter Verwendung der erfindungsgemäß vorgesehenen Federelemente bezeichnet. Es ergibt sich eine Verringerung der Exzentrizität bei $A_1$ max-$B_1$ max von 50 $\mu$m (16 %), bei $A_2$ max-$B_2$ max von 20 $\mu$m (6,7 %) und bei $A_3$ max-$B_3$ max von 40 $\mu$m (13,4 %), was einem Spurmittenversatz gemäß angegebenen Klammerwerten bei einer Normspurbreite von 300 $\mu$m entspricht.

Die Federkonstante des Federelements ist zweckmäßig im Bereich von 0,2 N/mm bis etwa 1 N/mm, vorzugsweise von 0,4 N/mm, zu wählen. Dieser Bereich beruht auf Geräteeigenheiten und verschiedenen Folienmaterialien.

### Ansprüche

1. Laufwerk für scheibenförmige Aufzeichnungsträger mit Mittelloch, insbesondere Magnetfolien in einer Umschlaghülle, enthaltend eine Antriebsvorrichtung für den Aufzeichnungsträger (16), die im wesentlichen aus einem antreibbaren Spannkonus (15) und einem angetriebenen Hohlkonus (22) besteht, wobei nach Einführung des Aufzeichnungsträgers dazwischen durch Ineingriffbringen von Spann- und Hohlkonus der Aufzeichnungsträger in Sollage antreibbar eingespannt wird und eine Einrichtung vorgesehen ist, mittels der Hohlkonus (22) in Wirkverbindung mit dem Spannkonus (15) gebracht und in Drehung versetzt wird, und danach der Aufzeichnungsträger (16) in Sollage festgeklemmt wird, dadurch gekennzeichnet, daß die Einrichtung zum Herstellen der Wirkverbindung ein Federelement (25-27) aufweist, das die Wirkverbindung durch das Innenloch des Aufzeichnungsträgers (16) hindurch herstellt und eine Federkonstante im Bereich zwischen 0,20 N/mm und 1,0 N/mm, vorzugsweise 0,4 N/mm besitzt, wodurch zu einem vorgegebenen Zeitpunkt der noch ruhende und nicht zentrierte Aufzeichnungsträger (16) durch die Relativdrehung und Mitnahme durch den Spannkonus (15) zentrierbar wird und erst nach Zentrierung in Sollage festklemmbar ist.

2. Laufwerk nach Anspruch 1, dadurch gekennzeichnet, daß das Federelement aus einer Metallfeder (25), vorzugsweise einer Blattfeder, besteht.

3. Laufwerk nach Anspruch 1, dadurch gekennzeichnet, daß das Federelement aus einem elastischen Kunststoffmaterial (26, 27), insbesondere Schaumstoffmaterial besteht.

4. Laufwerk nach einem der Ansprüche 2 oder 3, dadurch gekennzeichnet, daß das Federelement (27) relativ zur Drehachse von Spann- und Hohlkonus dezentrisch angeordnet ist.

5. Laufwerk nach einem der Ansprüche 1 bis 4, dadurch gekennzeichnet, daß zwei Federelemente, je eines am Spannkonus (15) und am Hohlkonus (22), vorgesehen sind.

### Claims

1. A drive apparatus for a recording disk having a central aperture, particularly a flexible magnetic disk in an envelope, comprising driving means for the recording disk (16), which consist essentially of a rotatable clamping member (15) and a driven recessed member (22), the recording disk, after having been introduced between the clamping member and the recessed member, being clamped in the ideal position for rotation by causing the said two members to engage, and a means being provided which non-positively connects the recessed member (22) to the clamping member (15) and causes the latter to rotate, following which the recording disk (16) is clamped in the ideal position, wherein the means for making the non-positive connection consists of a spring element (25-27) which effects the non-positive connection through the central aperture in the recording medium (16), and has a spring rate of from 0.20 N/mm to 1.0 N/mm, preferably 0.4 N/mm, as a result of which, at a predetermined point in time, the still stationary and non-centered recording disk (16) is centered by the relative motion and displacement by the clamping member (15), and is only clamped in the ideal position after it has been centered.

2. A drive apparatus as claimed in claim 1, wherein the spring element is a metal spring (25), preferably a leaf spring.

3. A drive apparatus as claimed in claim 1, wherein the spring element is made from a resilient plastics material (26, 17), particularly a foam plastic.

4. A drive apparatus as claimed in claim 2 or 3, wherein the spring element (27) is arranged eccentrically with respect to the axis of rotation of the clamping and recessed members.

5. A drive apparatus as claimed in any of claims 1 to 4, wherein a spring element is provided on each of the clamping and recessed members (15) and (22).

**Revendications**

1. Mécanisme d'entraînement de support d'enregistrement en forme de disque à trou central, en particulier feuille magnétique dans une enveloppe, contenant un dispositif d'avance du support d'enregistrement (16), constitué essentiellement d'un cône de serrage (15) entraînable et d'un cône creux (22) entraîné, le support d'enregistrement étant entraînable, encastré en position voulue, dès qu'il a été inséré entre les deux cônes mis en prise l'un avec l'autre, et il est prévu un moyen grâce auquel le cône creux (22) est mis en liaison active avec le cône de serrage (15) et entraîné en rotation et ensuite le support d'enregistrement (16) coincé en position voulue, caractérisé par le fait que le moyen pour réaliser la liaison active comprend un élément élastique (25-27) qui produit la liaison active par l'intermédiaire du trou intérieur du support d'enregistrement (16) et possède une constante d'élasticité dans la zone comprise entre 0,20 N/mm et 1,0 N/mm, de préférence de 0,4 N/mm grâce à quoi, à un instant prédéterminé, le support d'enregistrement (16), encore immobile et non centré, peut être centré par la rotation relative et l'entraînement par le cône de serrage (15) et être coinçable en position voulue seulement après centrage.

2. Mécanisme d'entraînement selon la revendication 1, caractérisé par le fait que l'élément élastique est constitué par un ressort métallique (25), de préférence un ressort-lame.

3. Mécanisme d'entraînement selon la revendication 1, caractérisé par le fait que l'élément élastique est constitué par un matériau plastique élastique (26, 27), en particulier un matériau alvéolaire.

4. Mécanisme d'entraînement selon la revendication 2 ou 3, caractérisé par le fait que l'élément élastique (27) est décentré par rapport à l'axe de rotation du cône de serrage et du cône creux.

5. Mécanisme d'entraînement selon l'une des revendications 1 à 4, caractérisé par le fait qu'il est prévu deux éléments élastiques, l'un sur le cône de serrage (15), l'autre sur le cône creux (22).

FIG.1

# FIG. 1a

FIG. 2a

15

25

22

FIG. 2b

15

26

22

FIG. 2c

15

22

27

FIG. 2d

22

27

FIG.3